# EUROPEAN PATENT APPLICATION

(11) **EP 1 426 642 A1**
(43) Date of publication of application: **09.06.2004**
(21) Application number: 03257484.0
(22) Date of filing: 27.11.2003
(51) Int. Cl.: F16D 27/118, F16H 1/28

(54) **Planetary gear type electro-magnetic clutch**

(30) Priority: 06.12.2002 JP 2002354974
(71) Applicant: Minebea Co., Ltd., Nagano-Ken 389-0293 (JP)
(72) Inventor: Yosuke Enno, Tokyo 143-8543 (JP)
(74) Representative: Wilson Gunn Gee

(57) **Abstract**

An electro-magnetic clutch apparatus (1) includes a plurality of planetary gears (13). The plurality of gears is configured so that they engage with and revolve around a first rotatable body (12,15) when the first rotatable body is rotating. A second rotatable body (14) provides support for the plurality of gears around the first rotatable body. The first rotatable body and the second rotatable body are configured so that when an electro-magnetic force supplied by an electro-magnetic force generating means is applied or removed, the internal gear (11) is fixed or free to rotate. The first rotatable body and the second rotatable body couple when the internal gear is fixed causing torque to be transmitted from the first rotatable body to the second rotatable body. When the internal gear is freely rotatable or not fixed, the first rotatable body and the second rotatable body are decoupled and torque is not transmitted from the first rotatable body to the second rotatable body.

## Description

The present invention relates to an electro-magnetic clutch that employs a planetary gear mechanism and an electro-magnetic solenoid.

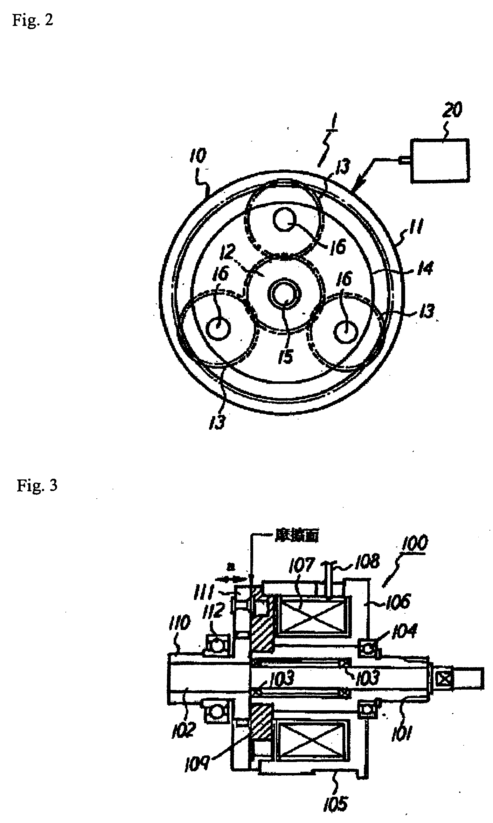

Figure 3 shows a side cross sectional view of friction electro-magnetic clutch 100. Figure 3 also shows hollow rotational shaft shaped rotatable body 101 that is referred to here as a first rotatable body. A solid shaft shaped second rotatable body 102 is located inside first rotatable body 101 and pushed through the shaft of shaft 101. Second rotatable body 102 is supported by first rotatable body 101 through a pair of bearings 103 positioned on the left and right sides of the apparatus such that second rotatable body 102 is allowed to rotate freely. First rotatable body 101 is supported by a housing 106 through shaft bearing 104 of electro-magnetic solenoid 105 such that first rotatable body 101 is allowed to rotate at will.

Electro-magnetic coil 107 is built into a housing 106 of electro-magnetic solenoid 105. Lead string 108, which is guided out from this electro-magnetic coil 107, passes through housing 106 and is connected electrically to a power source, not shown.

Disk shaped absorption plate 109 is disposed at the extremity of first rotatable body 101. Absorption plate 109 is made from an electrically conductive metal and is affixed to first rotatable body 101 using a press fitting method or the like. Electro-magnetic coil 107 is disposed facing the rear side of absorption plate 109.

Additionally, on the outer circumference of the side of the apparatus that comes in contact with absorption plate 109 of second rotatable body 102 boss member 110 is affixed by press fitting or a like method. Ring shaped armature 111 is spline-fitted on boss member 110 facing absorption plate 109 so as to be movable in the direction of the shaft in the direction of the arrow as shown in Figure 3.

Armature 111 is made of an electrically conductive metal, and it is biased by a spring member (not shown) away from the absorption plate 109 (towards the left in Fig. 3), thereby separating the armature 111 and absorption plate 109. Second rotatable body 102 is supported such that it rotates freely by an outer shaft bearing 112 that is press fitted around the circumference of boss member 110.

In friction type electro-magnetic clutch 100, electro-magnetic solenoid 105 is in the OFF state when electricity is not passed to electro-magnetic coil 107 of electro-magnetic solenoid 105. As a result of no electricity being passed to electro-magnetic coil 107, no electro-magnetic force is generated in electro-magnetic solenoid 105. Since armature 111 is separated from absorption plate 109 by the bias force of the spring member, electro-magnetic clutch 100 is in the OFF state. When electro-magnetic clutch 100 is in the OFF state the rotation of first rotatable body 101, for example, on the driving side is not transmitted to second rotatable body 102 and therefore second rotatable body 102 remains at rest.

Conversely, when electricity is passed through electro-magnetic coil 107 of the electro-magnetic solenoid 105 electro-magnetic solenoid 105 is in the ON state and generates an electro-magnetic force. As a result of the electro-magnetic force generated by electro-magnetic solenoid 105 armature 111 moves in the right direction of Fig. 3 against the bias force of the spring member and is absorbed in absorption plate 109. The rotation of first rotatable body 101 on the driving side is transmitted to second rotatable body 102 by the frictional force generated on the friction surfaces between the absorption plate 109 and armature 111, such that second rotatable body 102 and first rotation body 101 are driven into rotation together.

One of the disadvantages of the above mentioned friction type electro-magnetic clutch 100 is that the manufacturing process for the friction electro-magnetic clutch is complicated. The manufacturing process requires a high degree of quality control with respect to the number and type of allowable defects and a strict tolerance as to the planarity of the friction surfaces between absorption plate 109 and armature 111. Specific processes are necessary to manufacture the friction surfaces such that these surfaces provide a sufficient amount of friction that allows the clutch to operate property.

Another disadvantage of friction electro-magnetic clutch 100 is that the friction surfaces between absorption plate 109 and armature 111 are easily influenced by environmental factors. For example, the transmission torque capability of clutch 100 fluctuates easily depending on the temperature change of the frictional surfaces.

Another disadvantage of friction electro-magnetic clutch 100 shown in Figure 3 is that structurally it requires electro-magnetic coil 107 to be placed in the vicinity of the friction surfaces. Placement of the electro-magnetic coil in the clutch prevents significant thickness and weight reduction of the clutch to be achieved.

In general, in a first aspect of the present invention, a planetary electro-magnetic clutch is provided comprising a first rotatable body; a second rotatable body; a rotatable internal gear, a plurality of gears; wherein the first rotatable body is one of fixed and free to rotate in response to an electro-magnetic force generating means. The first rotatable body is centrally positioned on the inner side of the rotatable internal gear;

The plurality of gears is configured so that the plurality of gears engages with and revolves around the first rotatable body when the first rotatable body is rotating. The second rotatable body provides support for the plurality of gears around the first rotatable body. The first rotatable body and the second rotatable body are configured so that when an electro-magnetic force supplied by an electro-magnetic force generating means is applied, the rotation of the internal gear becomes fixed and the first rotatable body and the second rotatable body are coupled causing torque to be transmitted from the first rotatable body to the second rotatable body and when the electro-magnetic force is removed, the rotation of the internal gear is is freely rotatable or not fixed and the first rotatable body and the second rotatable body are decoupled and torque is not transmitted from the first rotatable body to the second rotatable body.

In general, in a second aspect of the present invention, the invention features a first rotatable body and a second rotatable body that are configured so that when an electro-magnetic force supplied by an electro-magnetic force generating means is applied, the rotation of the internal gear is not fixed and the first rotatable body and the second rotatable body are caused to decouple causing torque not to be transmitted from the first rotatable body to the second rotatable body and when the electro-magnetic force is removed, the rotation of the internal gear becomes fixed and the first rotatable body and the second rotatable body are coupled and torque is transmitted from the first rotatable body to the second rotatable body.

In one embodiment of the electro-magnetic clutch of the present invention the electro-magnetic force generating means is an electro-magnetic solenoid. In another embodiment of the present invention the electro-magnetic generating means is located separately from the first rotatable body, second rotatable body and the internal gear.

In another embodiment of the present invention the first rotatable body includes a sun gear that is coupled to a rotatable shaft for coupling to a drive source and in another embodiment the second rotatable body is a carrier.

The above advantages and features are representative embodiments only. It should be understood that they are not to be considered limitations on the invention as defined by the claims. Additional features and advantages of the invention will become apparent in the following description, from the drawing, and the claims.

The features and advantages of the present invention are described in the following detailed description and accompanying drawings in which like references denote like or corresponding parts, in which:

Figure 1 shows a schematic cross sectional side view of the planetary gear electro-magnetic clutch.

Figure 2 shows the planetary gear electro-magnetic clutch from the perspective looking in the direction of the arrow A depicted in Figure 1.

Figure 3 shows a cross sectional side view of a friction type electro-magnetic clutch.

The present invention provides an improved electro-magnetic clutch that may be manufactured in a less complicated and more efficient manner than is possible for friction electro-magnetic clutch 100 described above. The manufacturing process for friction electro-magnetic clutches are complicated because it requires a high degree of quality control with respect to the planarity and the allowable degree of defects present in the friction surfaces between absorption plate 109 and armature 111. Moreover, to obtain the desired performance, specific processes are required to match the degree of abrasiveness in the friction surfaces such that the surfaces provide a sufficient amount of friction that will allow the clutch 100 to operate property.

The present invention further provides a planetary gear electro-magnetic clutch that reduces the number and complexity of manufacturing processes required for the production of the planetary gear electro-magnetic clutch. In addition to reducing the number and complexity of the manufacturing processes required another object of the present invention is to inhibit the fluctuation of transmission torque capability due to environmental and temporal changes that can affect friction type electro-magnetic clutches. Moreover, in addition to functioning as a clutch mechanism the present invention also possesses a deceleration function.

The present invention further provides a structural arrangement that allows the electro-magnetic clutch to be reduced in size and weight if such a reduction is so desired by disassociating the solenoid from the electro-magnetic clutch.

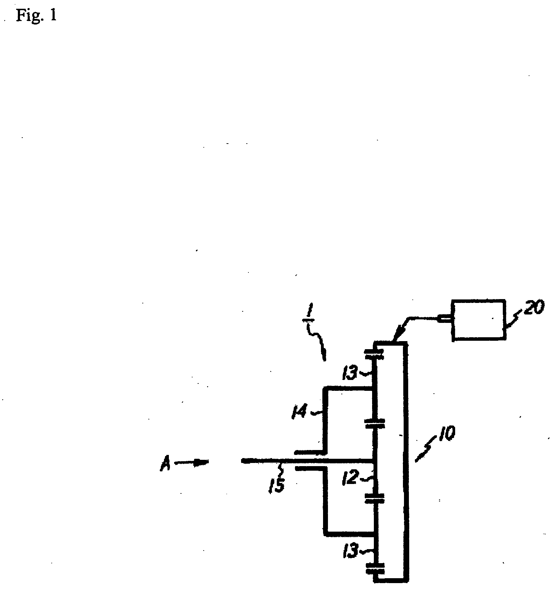

Figures 1 and 2 show planetary gear electro-magnetic clutch apparatus 1 according to the present invention and as previously mentioned Figure 3 shows friction electro-magnetic clutch 100. Fig. 1 is a schematic side cross sectional view of planetary gear electro-magnetic clutch 1 of the present invention, and Fig. 2 is a view of planetary electro-magnetic clutch 1 in the direction of the arrow A of Fig. 1.

Referring to Figures 1 and 2, a schematic cross sectional view of an electro-magnetic clutch 1 according to an exemplary embodiment is shown. Planetary gear electro-magnetic clutch 1 includes planetary gear mechanism 10 and electro-magnetic solenoid 20. Planetary gear mechanism 10 includes rotatable internal gear 11. Sun gear 12, which is also rotatable is centrally positioned on the inner side of internal gear 11. Planetary mechanism 10 also includes a plurality of planetary gears that are referred to as planetary gears 13. In the embodiment shown in Figure 2, planetary gear mechanism 10 includes three planetary gears 13. Planetary gears 13 are arranged so that each gear 13 engages with centrally positioned sun gear 12 and internal gear 11 in a manner that allows planetary gears 13 to rotate as well as revolve around sun gear 12. Carrier 14 supports and maintains the plurality of planetary gears 13 in position.

Sun gear 12 is attached to the extremity of rotatable shaft 15 that passes through the axial center portion of carrier 14. In the embodiment shown in Figure 2, sun gear 12 and rotatable shaft 15 rotate as one body and are referred to as the first rotatable body. Rotatable shaft 15 is coupled to a driving source. The first rotatable body is the driving side of electro-magnetic clutch 1 and connected to a driving source, which is not shown. The plurality of gears are rotatably coupled to shaft 16 which extend from carrier 14 which is referred to as the second rotatable body. Each shaft 16 supports each planetary gear 13 as the planetary gears rotate freely. Carrier 14 rotates together with sun gear 12 while accompanying the revolution of planetary gears 13 around sun gear 12. In the present embodiment, carrier 14 is the driven side..

Electro-niagnetic solenoid 20 generates an electro-magnetic force that fixes the rotation of internal gear 11 of planetary gear mechanism 10 when electricity is passed through it from a source of electricity, not shown. In contrast, when electricity does not flow through electro-magnetic solenoid 20 an electro-magnetic force is not generated because solenoid 20 is turned off. In the absence of electro-magnetic forces, the internal gear 11 is free to rotate does not become fixed. In the embodiment shown in Figures 1 and 2, electro-magnetic solenoid 20 is placed separately from the planetary gear mechanism 10.

Planetary gear electro-magnetic clutch 1 is set to the "On" state when electro-magnetic solenoid 20 or similar mechanism is energized, which fixes the rotation of internal gear 11. When the rotation of internal gear 11 is fixed planetary gear electro-magnetic clutch 1 is in the On state.

When the planetary gear electro-magnetic clutch 1 is in the On state, shaft 15, which is part of the first rotatable body, is caused to rotate. Sun gear 12, which is also part of the first rotatable body, rotates as a result of the rotational movement of shaft 15. Sun gear 12 and internal gear 11 are engaged with each planetary gear 13 so that each planetary gear 13 revolves around the circumference of the sun gear 12 while rotating on shaft 16. Carrier 14 is the second rotatable body that supports planetary gears 13 in position. Carrier 14 rotates in a direction that is opposite to the direction of rotation for rotatable shaft 15 and sun gear 12 and at a predetermined speed reduction ratio.

More specifically, when the planetary gear type electro-magnetic clutch 1 in the on state. The rotation of internal gear 11 of the planetary gear mechanism 10 is fixed so as to connect or couple the first rotatable body, which includes shaft 15 and the sun gear 12, and the second rotatable body, which is carrier 14. The coupling of the first and second rotatable bodies causes the rotation (torque) of the first rotatable body, which is the driving side to decelerate and transmits such deceleration to the second rotatable body to be driven at a predetermined speed.

In contrast, when no electricity is passed through electro-magnetic solenoid 20 it remains in the OFF state. When electro-magnetic solenoid 20 is in the Off state internal gear 11 rotates freely. As a result planetary gear electro-magnetic clutch 1 is also in the OFF state and the transmission of the rotation (torque) of the first rotation body to the second rotatable body is discontinued, such that the second rotatable body remains at rest.

More specifically, when the rotation of internal gear 11 of planetary gear mechanism 10 is no longer fixed in a rotation, the first rotatable body, which includes sun gear 12 and rotatable shaft 15, become decoupled from the second rotatable body, carrier 14. Because the first rotatable body and the second rotatable body are decoupled transmission of the rotation (torque) of the first rotatable body, which is the driving side of clutch 1, to the second rotatable body, which is the driven side of clutch 1 is discontinued.

Unlike the conventional friction type electro-magnetic clutch described in Figure 1, planetary gear electro-magnetic clutch 1 does not require a manufacturing process to match the friction surfaces by abrasion or a similar method. Therefore, less secondary machining processes for the various parts of the clutch are required, which allows for an overall reduction in the number and complexity of manufacturing processes required.

Moreover, fluctuation in the transmission torque capability due to environmental and temporal changes are minimized because in the planetary electro-magnetic clutch 1 the transmission of the torque is achieved by the planetary gears and not by the frictional forces generated on the friction surfaces between absorption plate log and armature 111 of the friction type electro-magnetic clutch 100.

In addition, since the transmission of the torque is achieved through a planetary gear mechanism 10, it follows that the planetary gear type electro-magnetic clutch 1 of the present invention possesses a deceleration function in addition to the original clutch function such that miniaturization of clutch 1 is possible. Having the additional deceleration function provides a cost benefit because clutch 1 can perform both clutching and deceleration functions without additional parts or components being required for its operation.

In addition, according to planetary gear type electro-magnetic clutch 1 of the present invention electro-magnetic solenoid 20 may be located separately from the planetary gear mechanism 10. Such separation allows for an increased degree of flexibility in locating of electro-magnetic solenoid 20. As a result of this increased flexibility, the thickness and weight of planetary gear electro-magnetic clutch 1 may be substantially reduced.

In the embodiment of the present invention that was described above, the first rotatable body and the second rotatable body are coupled when electro-magnetic clutch 1 is set for ON by setting electro-magnetic solenoid 20 to ON, and the first rotatable body and the second rotatable body are decoupled when electro-magnetic clutch 20 is set to OFF by de-energizing electro-magnetic solenoid 20. Conversely, in another embodiment of the present invention the first rotatable body and the second rotatable body are decoupled when the electro-magnetic clutch 1 is set to OFF by setting the electro-magnetic solenoid 20 to ON, the first rotatable body and the second rotatable body are coupled when the electro-magnetic clutch 20 is set to ON by setting the electro-magnetic solenoid 20 to OFF.

For the convenience of the reader, the above description has focused on a representative sample of all possible embodiments, a sample that teaches the principles of the invention and conveys the best mode contemplated for carrying it out. The description has not attempted to exhaustively enumerate all possible variations. Other undescribed variations or modifications may be possible. For example, where multiple alternative embodiments are described, or to combine elements of the embodiments described here with other modifications or variations that are not expressly described. Many of those undescribed variations, modifications and variations are within the literal scope of the following claims, and others are equivalent.

## Claims

1. An electro-magnetic clutch comprising;
an internal gear that is selectively one of fixed and rotatable in response to an electro-magnetic force supplied by an electro-magnetic force generating means;
a first rotational body centrally positioned on an inner side of said rotatable internal gear;
a second rotatable body;
a plurality of gears coupled to said second rotatable body configured so that said plurality of gears engage with and revolve around said first rotatable body when said first rotatable body is rotating; and
wherein when an electro-magnetic force supplied by an electro-magnetic force generating means is applied said internal gear is fixed and said first rotatable body and said second rotatable body are coupled such that torque is transmitted from said first rotatable body to said second rotatable body and when said electro-magnetic force is removed said internal gear is rotatable and said first rotatable body and said second rotatable body are decoupled and torque is not transmitted from said first rotatable body to said second rotatable body.

2. An electro-magnetic clutch comprising:
an internal gear that is selectively one of fixed and rotatable in response to an electro-magnetic force supplied by an electro-magnetic force generating means;
a first rotational body centrally positioned on an inner side of said rotatable internal gear;
a second rotatable body;
a plurality of gears coupled to said second rotatable body configured so that said plurality of gears engage with and revolve around said first rotatable body when said first rotatable body is rotating; and
wherein when an electro-magnetic force supplied by an electro-magnetic force generating means is applied said internal gear is rotatable and said first rotatable body and said second rotatable body are decoupled such that torque is not transmitted from said first rotatable body to said second rotatable body and when said electro-magnetic force is removed said internal gear is fixed and said first rotatable body and said second rotatable body are coupled and torque is transmitted from said first rotatable body to said second rotatable body.

3. The electro-magnetic clutch of Claim 1 or 2, wherein said electro-magnetic force generating means is an electro-magnetic solenoid.

4. The electro-magnetic clutch of any preceding Claim, wherein said electro-magnetic force generating means is located separately from said first rotatable body, second rotatable body and said internal gear.

5. An electro-magnetic clutch comprising:
an internal gear that is selectively one of fixed and rotatable;
a first rotatable body having a central gear;
a second rotatable body; and
a plurality of gears coupled to the second rotatable body, each of the plurality of gears engaging the rotatable internal gear and the central gear of the first rotatable body; wherein when the internal gear is fixed, the second rotatable body is rotated, and when the internal gear is free to rotate, the second rotatable body is fixed.

6. The electro-magnetic clutch of Claim 5, wherein said internal gear is selectively one of fixed and rotatable in response to an electro-magnetic force generated by an electro-magnetic solenoid.

7. The electro-magnetic clutch of Claim 6, wherein said electro-magnetic solenoid is located separately from said first rotational body, second rotational body and said internal gear.

8. The electro-magnetic clutch of any preceding Claim, wherein said central gear comprises a sun gear and said sun gear is coupled to a shaft for coupling to a drive source.

9. The electro-magnetic clutch of any preceding Claim, wherein each of said plurality of gears are rotatably coupled to shafts extending from said second rotatable body.
